# EUROPEAN PATENT APPLICATION

(11) **EP 3 859 417 A1**
(43) Date of publication of application: **04.08.2021**
(21) Application number: 20845650.9
(22) Date of filing: 19.08.2020
(51) Int. Cl.: G02B 6/44

(54) **OPTICAL FIBER PROVIDED WITH COLORED MARKINGS AT INTERVALS, PREPARATION METHOD THEREFOR, AND OPTICAL CABLE**

(30) Priority: 06.12.2019 CN 201911238274
(71) Applicant: Hengtong Optic-Electric Co., Ltd., Suzhou, Jiangsu 215234 (CN)
(72) Inventor: HAN, Yufeng, Suzhou, Jiangsu 215234 (CN); SHI, Huiping, Suzhou, Jiangsu 215234 (CN); WU, Zhongliang, Suzhou, Jiangsu 215234 (CN); WU, Binhua, Suzhou, Jiangsu 215234 (CN)
(74) Representative: Marks & Clerk France
(86) International application number: PCT/CN2020/109992
(87) International publication number: WO 2021/109619

(57) **Abstract**

The invention provides a spaced coloring optical fiber, a preparation method thereof and an optical cable, and relates to the field of optical fiber and cable processing and manufacturing. The spaced coloring optical fiber includes an optical fiber body; and a plurality of spaced coloring layers formed directly on the outer surface of the optical fiber body. The coloring layer is directly formed on the surface of the optical fiber body without using a color ring so that no stress will be exerted on the optical fiber body, and the attenuation of the spaced coloring optical fiber is reduced.

## Description

### FIELD OF THE PRESENT DISCLOSURE

The invention relates to the field of optical fiber and cable processing and manufacturing, in particular to a spaced coloring optical fiber, a preparation method thereof and an optical cable.

### BACKGROUND OF THE PRESENT DISCLOSURE

The main purpose of optical fiber coloring is to facilitate people to distinguish it. At present, in order to accurately distinguish the optical fibers when producing an optical cable with a core of large number of optical fibers, the optical fiber coloring ring technology is generally used for spraying a ring on an optical fiber body and then the optical fiber is integrally coloring. The optical fiber is distinguished by the existence of a color ring. When the fiber count is large, the optical fiber can be further distinguished by increasing the number of color rings. However, spraying the color ring on the optical fiber can exert certain stress on the optical fiber body. When the optical fiber is arrayed, the thickness of the color ring area is larger than the diameter of the optical fiber, so that the optical fiber is continuously stressed when the optical fiber is arrayed, and finally, the attenuation of the optical fiber is rather large. The more the number of the color rings, the more obvious the attenuation of the optical fiber.

In view of this, the present invention is proposed.

### SUMMARY OF THE PRESENT DISCLOSURE

It is an object of the present invention to provide a spaced coloring optical fiber in which a coloring layer is directly formed on the surface of an optical fiber body without using a color ring, so that no stress is exerted on the optical fiber body, and the attenuation of the spaced coloring optical fiber is reduced.

The spaced coloring optical fiber provided by the invention comprises:
an optical fiber body; and,
a plurality of spaced coloring layers formed directly on the outer surface of the optical fiber body.

Further, spacing between two adjacent coloring layers is 1-15 mm, preferably 2-5 mm.

Further, an area between two adjacent coloring layers is a blank area, and the lengths of any two adjacent blank areas are equal in a direction along which the optical fiber extends,
or,
the optical fiber comprises a plurality of repeating units, at least two blank areas are included in each repeating unit in the direction along which the optical fiber extends, and lengths of the blank areas are sequentially increased or decreased.

Further, the length of each coloring layer is equal.

Further, the length of the coloring layer is 5-10 cm;
preferably, the thickness of the coloring layer is 3-6 µm.

Further, the color of the coloring layer includes at least one of blue, orange, green, brown, gray, white, red, black, yellow, purple, pink, and cyan.

Further, the raw material of the coloring layer comprises an acrylic-based ink, preferably an acrylic-based UV curing coloring ink.

Further, the optical fiber body has an outer diameter of 200 µm or 245 µm.

A preparation method of the aforementioned spaced coloring optical fiber comprises:
directly forming at least two spaced coloring layers on the outer surface of the optical fiber body.

An optical cable comprises the aforementioned spaced coloring optical fiber.

Compared with the prior art, the invention has at least the following beneficial effects.

According to the spaced coloring optical fiber disclosed by the invention, the coloring layer is directly formed on the surface of the optical fiber body without using a color ring, so that stress is prevented from being exerted on the optical fiber body, the optical fiber is hardly affected by the stress when the optical fiber is arrayed, and overlarge optical fiber attenuation is thus not generated. The process of forming the color ring is omitted to directly color the surface of the optical fiber body, which is beneficial to improving the production efficiency and reducing the production cost. Moreover, the spaced coloring optical fiber of the invention is convenient to distinguish. The optical fiber can be distinguished according to the length of the coloring layer, the color of the coloring layer and the spacing between two adjacent coloring layers, and the spaced coloring optical fiber is suitable for producing optical cables with a large fiber count. In addition, the spaced manner is used for coloring, so that it is beneficial to reduce the use of coloring ink, and the production cost is reduced.

### BRIEF DESCRIPTION OF THE DRAWINGS

In order to explain the specific embodiments of the present invention or the technical scheme in the prior art more clearly, the following will briefly introduce the drawings needed to be used in the specific embodiments or the prior art description. Obviously, the drawings in the following description are some embodiments of the present invention, and for those of ordinary skills in the art, without involving creative work, other drawings can be obtained from these drawings.
Fig. 1 is a schematic view showing a structure of a spaced coloring optical fiber according to one embodiment of the present invention;
Fig. 2 is a cross-sectional view in the direction AA' of Fig. 1;
Fig. 3 is a schematic view showing a structure of an optical fiber with an optical fiber body being integrally coloring according to the prior art;
Fig. 4 is a cross-sectional view in the direction BB' of Fig. 3;
Fig. 5 is a schematic view showing a structure of an optical fiber with an optical fiber body being coloring by a coloring ring manner according to the prior art;
Fig. 6 is a cross-sectional view in the direction CC' of Fig. 5.

### DESCRIPTION OF THE EMBODIMENTS

To make the object, technical scheme, and advantage of the embodiments of the present invention clearer, the technical scheme in the embodiments of the present invention will be clearly and completely described below in conjunction with the accompanying drawings in the embodiments of the present invention. Obviously, the described embodiments are only a part of the embodiments of the present invention, rather than all the embodiments. The assembly of the embodiments of the present invention, which are generally described and illustrated in the drawings herein, may be arranged and designed in a variety of different configurations.

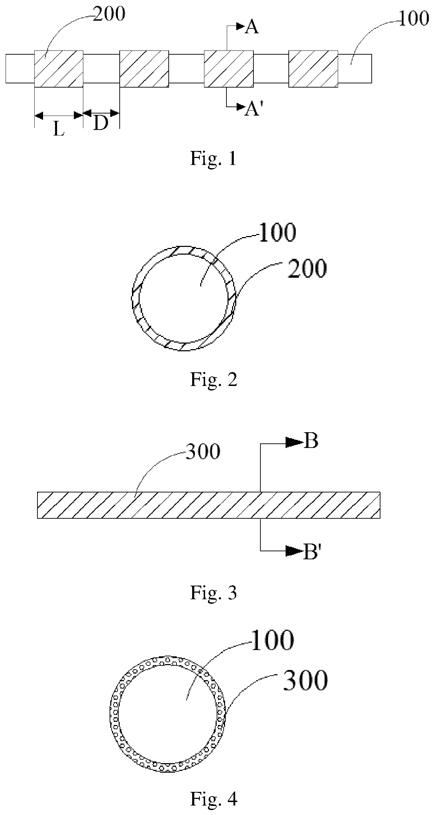

In one aspect of the present invention, there is provided a spaced coloring optical fiber, and referring to Figs. 1 and 2, the spaced coloring optical fiber includes:
an optical fiber body 100; and,
a plurality of spaced coloring layers 200 formed directly on the outer surface of the optical fiber body 100.

It should be noted that the above-mentioned plurality of spaced coloring layers refers to the spaced coloring layers having a coloring layer of 100 mm in length every 5 mm of a blank area on a coloring optical fiber of a certain length.

Optical fiber is an abbreviation of light-conducting fiber. In the optical cable with a core of large number of optical fibers, the number of the optical fiber is large, so that it is necessary to distinguish each optical fiber accurately. According to the spaced coloring optical fiber of the present invention, the coloring layer is directly formed on the surface of the optical fiber body without the use of a color ring, so that stress is prevented from being exerted on the optical fiber body, the optical fiber is hardly affected by the stress during the array, and excessive optical fiber attenuation is thus not generated. Moreover, the surface of the optical fiber body is directly colored, so that the production efficiency is improved, and the production cost is reduced. The spaced coloring optical fiber of the invention is convenient to distinguish. The optical fiber can be distinguished according to the length of the coloring layer, the color of the coloring layer and the spaced area between two adjacent coloring layers, which is suitable for producing the optical cable with a large fiber count. In addition, the spaced manner is used for coloring, so that it is beneficial to reduce the use of coloring ink, and the production cost is reduced.

It will be understood that there is an uncolored optical fiber body area between two adjacent coloring layers and the spacing between the two adjacent coloring layers is the length of the uncolored optical fiber body area. The invention distinguishes optical fibers by the length of the coloring layers, the color of the coloring layers, and the length of the uncolored optical fiber body area.

It will be understood that the cross-sectional shape of the optical fiber body is a circle, and the cross-sectional shape of the coloring layer formed on the surface of the optical fiber body may be annular or a "C" shape, etc., so long as the color can be clearly displayed and recognized to satisfy the requirements of the coloring layer.

Referring to Figs. 3 and 4, as compared to integrally coloring the optical fiber body, the surface of the entire optical fiber body 100 is coated with coloring ink 300, and the optical fiber is distinguished by the color of the coated ink. However, this coloring method is not conducive to distinguish optical fibers in optical cables with a large fiber count.

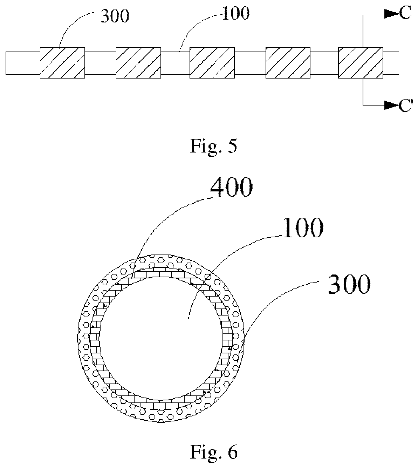

Referring to Figs. 5 and 6, as compared to coloring an optical fiber body in a coloring ring manner, a color ring 400 spaced-apart is firstly formed on the surface of the optical fiber body 100, then the coloring ink 300 is coated to the outer surface of the optical fiber body 100 where the color ring 400 forms by means of integral coating. Spraying the color ring on the optical fiber body can exert certain stress on the optical fiber body. When the optical fiber is arrayed, because the thickness of the color ring area is larger than the diameter of the optical fiber body, the optical fiber body is continuously stressed when the optical fiber is arrayed, and finally, the attenuation of the optical fiber is rather large which has a particularly obvious influence on the optical fiber of 0.200µm grade. Besides, when the multi-color ring process is used, a greater degree of optical fiber attenuation is caused in that the number of color rings is increased.

In some embodiments of the present invention, referring to Fig. 1, the spacing D between two adjacent coloring layers 200 is 1-15 mm (e.g., may be 1 mm, 3 mm, 4 mm, 6 mm, 8 mm, 10 mm, 12 mm, 14 mm or 15 mm, etc.). Compared with the above length range, when the spacing between two adjacent coloring layers is too long, the appearance of the coloring optical fiber can be influenced, and meanwhile, the protection of the coloring layers on the optical fiber is not facilitated. When the spacing between two adjacent coloring layers is too short, the distribution of the spacing is not convenient to observe, and the identification of the optical fiber is thus difficult.

In some preferred embodiments of the present invention, the spacing between two adjacent coloring layers is 2-5 mm.

In some embodiments of the present invention, the area between two adjacent coloring layers is a blank area. The length of any two adjacent blank areas (the length of the blank area is the spacing length between two adjacent coloring layers) is equal in the direction along which the optical fiber extends. Therefore, it is convenient to control the formation of the coloring layers, and it is possible to distinguish the optical fibers according to the spacing between two adjacent coloring layers.

In some other embodiments of the present invention, the optical fiber includes a plurality of repeating units, at least two blank areas are included in each repeating unit in the direction along which the optical fiber extends, and the lengths of the blank areas are sequentially increased or decreased. For example, three blank areas may be included in each repeating unit, and in the direction along which the optical fiber extends, the lengths of the three blank areas may be 2 mm, 3 mm and 4 mm (in which case the arrangement of the lengths of the blank areas in the direction along which the optical fiber extends may be 2 mm, 3 mm, 4 mm, 2 mm, 3 mm, 4 mm ... 2 mm, 3 mm, 4 mm ...), or the lengths of the three blank areas may be 4 mm, 3 mm and 2 mm (in which case the arrangement of the lengths of the blank areas in the direction in which the optical fiber extends may be 4 mm, 3 mm and 2 mm, 4 mm, 3 mm and 2 mm ... 4 mm, 3 mm and 2 mm ...). It will be understood that between two adjacent blank areas arranged according to the above-mentioned rule are coloring layers, and the lengths of the coloring layers may or may not be equal. Therefore, it is convenient to control the formation of the coloring layers, and it is possible to distinguish the optical fibers according to the spacing between two adjacent coloring layers.

It will be understood that the number of repeating units can be flexibly selected according to the actual situation, for example, according to the fiber count of the optical cable or the length of the optical fiber.

In some embodiments of the present invention, the length of each coloring layer is equal. Therefore, the coloring is convenient and easy to control.

In some embodiments of the present invention, referring to Fig. 1, the length L of the coloring layer 200 is 5-10 cm (e.g., may be 5 cm, 6 cm, 7 cm, 8 cm, 9 cm or 10 cm, etc.). Therefore, the length of the coloring layer is easy to distinguish, and ink saving is facilitated. With respect to the above length range, when the length of the coloring layer is less than 5 cm, the coloring layer and the spacing area are distributed too densely, which is not conducive to the identification of the optical fiber. When the length of the coloring layer is greater than 10 cm, the spacing is distributed too sparsely, which is not conducive to the identification of the optical fiber when the length of the observable optical fiber is too small.

In some embodiments of the present invention, the coloring layer has a thickness of 3-6 µm (e.g., may be 3 µm, 4 µm, 5 µm, or 6 µm, etc.). Therefore, the coloring layer is suitable in thickness, easy to distinguish, capable of being used for a long time, and beneficial to ink saving. With respect to the above thickness range, when the thickness of the coloring layer is less than 3 µm, the coloring layer may be easily cracked, and the color of the coloring layer may be rather faint on the overall appearance to make it difficult to identify. When the thickness of the coloring layer is greater than 6 µm, the ink may be poorly cured to cause the coloring layer to fall off from the coloring optical fiber, and may also cause quality problems such as increased attenuation of the optical fiber.

In some embodiments of the present invention, the colors of the plurality of coloring layers on the same optical fiber may be the same or different, and may be flexibly selected according to practical requirements. For example, the colors of the coloring layers include at least one of blue, orange, green, brown, gray, white, red, black, yellow, purple, pink, and cyan. Therefore, there are many manners that can be used for distinguishing the optical fibers. This is conductive to distinguish the optical fibers by matching the colors and the coloring layers at intervals, and can be used for producing optical cables with a large fiber count.

In some embodiments of the present invention, the raw material for the coloring layer comprises an acrylic-based ink, preferably an acrylic-based UV (ultraviolet) curing coloring ink. Therefore, the material is wide in the source, low in price, good in coloring effect and difficult to decolorize.

In some embodiments of the present invention, the optical fiber body has an outer diameter of 200 µm or 245 µm.

In another aspect of the present invention, the present invention provides a preparation method for the aforementioned spaced coloring optical fiber. The preparation method includes: directly forming at least two spaced-apart coloring layers on the outer surface of the optical fiber body. Therefore, the operation is simple, convenient and easy to realize.

In some embodiments of the present invention, an acrylic-based UV curing coloring ink is coated on the surface of the optical fiber body to form a coloring layer after UV light curing. The optical fiber body and the coloring layer are identical to those described above and will not be described in more detail herein.

In another aspect of the present invention, there is provided an optical cable comprising the spaced coloring optical fibers described above.

It should be noted that the above optical cable may also include, in addition to the aforementioned spaced coloring optical fiber, a structure that a conventional optical cable should have, such as a structure of a filler, a protective jacket, a waterproof layer, and a buffer layer, which will not be described in more detail herein.

Some embodiments of the present invention will be described in detail below with reference to specific examples. It should be noted that the examples and features in the examples may be combined with one another without conflicts.

### Examples

### Example 1

The spaced coloring optical fiber includes:
an optical fiber body having a length of 12 km and an outer diameter of 200 µm; and
a coloring layer formed directly on the outer surface of the optical fiber body, the length of the coloring layer being 5 cm, the spacing between two adjacent coloring layers being equal and 2 mm, the thickness of the coloring layer being 3 µm, and the colors of the coloring layers being the same and blue.

### Example 2

The structure of the spaced coloring optical fiber is the same as that in Example 1, except that the spacing between two adjacent coloring layers is 5 mm.

### Example 3

The structure of the spaced coloring optical fiber is the same as that in Example 1, except that the spacing between two adjacent coloring layers is 3 mm.

### Example 4

The structure of the spaced coloring optical fiber is the same as that in Example 1, except that the spacing between two adjacent coloring layers is 1 mm.

### Example 5

The structure of the spaced coloring optical fiber is the same as that in Example 1, except that the spacing between two adjacent coloring layers is 6 mm.

### Example 6

The structure of the spaced coloring optical fiber is the same as that in Example 1, except that:
the area between two adjacent coloring layers is a blank area, the optical fiber includes a plurality of repeating units, three blank areas are included in each repeating unit in the direction along which the optical fiber extends, and the lengths of the three blank areas are 2 mm, 3 mm and 4 mm.

### Example 7

The structure of the spaced coloring optical fiber is the same as that in Example 1, except that the length of the coloring layer is 10 cm.

### Example 8

The structure of the spaced coloring optical fiber is the same as that in Example 1, except that the length of the coloring layer is 8 cm.

### Example 9

The structure of the spaced coloring optical fiber is the same as that in Example 1, except that the length of the coloring layer is 3 cm.

### Example 10

The structure of the spaced coloring optical fiber is the same as that in Example 1, except that the length of the coloring layer is 12 cm.

### Example 11

The structure of the spaced coloring optical fiber is the same as that in Example 1, except that the thickness of the coloring layer is 6 µm.

### Example 12

The structure of the spaced coloring optical fiber is the same as that in Example 1, except that the thickness of the coloring layer is 4.5 µm.

### Example 13

The structure of the spaced coloring optical fiber is the same as that in Example 1, except that the thickness of the coloring layer is 2 µm.

### Example 14

The structure of the spaced coloring optical fiber is the same as that in Example 1, except that the thickness of the coloring layer is 8 µm.

### Comparative Example 1

An optical fiber with color rings includes:
an optical fiber body, the same as that in Example 1;
color rings spaced-apart, wherein the color rings are formed on the surface of the optical fiber body, and the length of the color rings and the spacing between two adjacent color rings are the same as that in Example 1; and
a coloring layer covering the optical fiber body and the color rings, the coloring layer having the same color as that in Example 1.

The performance test result for the spaced coloring optical fiber of Examples 1-14 and the optical fiber with color rings of the Comparative Example 1 is shown in Table 1 below:

**Table 1**

| | Fiber Body Attenuation (db/km) | Processed Optical Fiber Attenuation (db/km) |
|---|---|---|
| Example 1 | 0.185 | 0.185 |
| Example 2 | 0.182 | 0.183 |
| Example 3 | 0.187 | 0.186 |
| Example 4 | 0.185 | 0.185 |
| Example 5 | 0.185 | 0.185 |
| Example 6 | 0.182 | 0.182 |
| Example 7 | 0.187 | 0.186 |
| Example 8 | 0.186 | 0.186 |
| Example 9 | 0.185 | 0.185 |
| Example 10 | 0.188 | 0.186 |
| Example 11 | 0.189 | 0.192 |
| Example 12 | 0.188 | 0.186 |
| Example 13 | 0.185 | 0.186 |
| Example 14 | 0.185 | 0.195 |
| Comparative Example 1 | 0.186 | 0.245 |

Note: the fiber body attenuation refers to the attenuation of an optical fiber body, and the processed optical fiber attenuation refers to the attenuation of a spaced coloring optical fiber corresponding to each example or the attenuation of an optical fiber with color rings corresponding to the comparative instance.

Finally, it should be noted that: the above examples are merely illustrative of the technical schemes of the present invention and are not intended to be limiting thereof; although the present invention has been described in detail with reference to the foregoing examples, those skilled in the art will appreciate that: the technical schemes recited concerning the above examples can still be modified, or some or all of the technical features thereof can be equivalently replaced; such modifications or substitutions do not depart the nature of the corresponding technical schemes from the scope of the various examples and technical schemes of the present invention.

## Claims

1. A spaced coloring optical fiber, **characterized by** comprising:
an optical fiber body; and a plurality of spaced coloring layers formed directly on an outer surface of the optical fiber body.

2. The spaced coloring optical fiber according to claim 1, **characterized in that** a spacing between two adjacent coloring layers is 1-15 mm, preferably 2-5 mm.

3. The spaced coloring optical fiber according to claim 1 or 2, **characterized in that** an area between two adjacent coloring layers is a blank area, and lengths of any two adjacent blank areas are equal in a direction along which the optical fiber extends,
or,
the optical fiber comprises a plurality of repeating units, at least two blank areas are included in each repeating unit in the direction along which the optical fiber extends, and lengths of the blank areas are sequentially increased or decreased.

4. The spaced coloring optical fiber according to claim 3, **characterized in that** the length of each coloring layer is equal.

5. The spaced coloring optical fiber according to claim 1, 2 or 4, **characterized in that** the length of the coloring layer is 5-10 cm;
preferably, a thickness of the coloring layer is 3-6 µm.

6. The spaced coloring optical fiber according to claim 1, 2 or 4, **characterized in that** a color of the coloring layer includes at least one of blue, orange, green, brown, gray, white, red, black, yellow, purple, pink, and cyan.

7. The spaced coloring optical fiber according to claim 1, 2 or 4, **characterized in that** raw material of the coloring layer comprises an acrylic-based ink, preferably an acrylic-based UV curing coloring ink.

8. The spaced coloring optical fiber according to claim 1, 2 or 4, **characterized in that** the optical fiber body has an outer diameter of 200 µm or 245 µm.

9. A preparation method for the spaced coloring optical fiber according to any one of claims 1 to 8, **characterized by** comprising:
directly forming at least two spaced coloring layers on the outer surface of the optical fiber body.

10. An optical cable, **characterized by** comprising the spaced coloring optical fiber of any one of claims 1-8.
